# EUROPEAN PATENT SPECIFICATION

(11) **EP 0 847 940 B1**
(45) Date of publication and mention of the grant of the patent: **06.05.1999**
(21) Application number: 97203699.0
(22) Date of filing: 26.11.1997
(51) Int. Cl.: B65G 15/60, B65G 39/12, B65G 47/18, B65G 47/52, A01D 33/04

(54) **Device and method for transporting agricultural products**
Fördervorrichtung und -verfahren für landwirtschaftliche Produkte
Dispositif et procédé de transport pour produits agricoles

(30) Priority: 13.12.1996 NL 1004774
(43) Date of publication of application: 17.06.1998
(73) Proprietor: Miedema BV, 8830 AA Winsum (NL)
(72) Inventor: Wondergem, Jan, 8607 KC Sneek (NL)
(74) Representative: Louet Feisser, Arnold

(56) References cited:
- FR-A- 2 604 596
- GB-A- 692 217
- GB-A- 890 160
- GB-A- 933 097

## Description

The invention relates to a device for transporting agricultural products, in particular potatoes, which device comprises a conveyor belt and means for depositing the agricultural products on the conveyor belt from the side of said conveyor belt, where by at least part of the upper surface of the conveyor belt slopes downward in the transverse direction of the conveyor belt from the side where said means for depositing the agricultural products onto the conveyor belt are located, toward the central portion of the conveyor belt, at least near said means. The invention relates in particular to the transportation of potatoes, but the term potatoes used herein is meant as an example of an agricultural product. Such device is disclosed in GB-A-890160.

After potatoes have been mechanically harvested, it is usual to remove earth and the like material therefrom in a device specially intended for that purpose, after which the potatoes thus cleaned are deposited onto a conveyor belt for further transport. It is usual thereby to deposit the potatoes onto the conveyor belt from the side, so that they are subsequently carried away in lateral direction on the conveyor belt.

When the potatoes are deposited onto the conveyor belt from the side and subsequently transported on said conveyor belt, the problem may arise that the potatoes are distributed asymmetrically over the conveyor belt, which leads to a reduced capacity of the conveyor belt. When the conveyor belt is driven at a higher velocity by way of compensation, this may cause damage to the potatoes, because they are subjected to a higher load, both upon being deposited onto the conveyor belt and upon leaving the conveyor belt.

The object of the invention is to provide a device for transporting agricultural products, whereby said transport takes place in an optimal and efficient manner whilst minimizing the load which is exerted on the agricultural products and which may cause damage to said agricultural products.

In order to accomplish that objective the invention is characterized in that said upper surface slopes downward from the edge to a location beyond the centre of the conveyor belt. In practice it has become apparent that this asymmetrical cross-section of the conveyor belt makes it possible to obtain a symmetrical distribution of the potatoes on the conveyor belt once the upper surface of the conveyor belt takes on a substantially flat shape again after having passed the place where the potatoes are deposited onto the conveyor belt. Such a symmetrical distribution makes it possible to utilize the capacity of the conveyor belt optimally.

In a preferred embodiment said upper surface is substantially V-shaped in the transverse direction of the conveyor belt, whereby the upper surface comprises a wide sloping surface, on the side where said means are located, and a narrower sloping surface, on the other side of the conveyor belt.

In a preferred embodiment the V-shaped upper surface includes a smaller angle with the horizontal on the side where said means are located than on the other side of the conveyor belt. The sloping upper surface preferably includes an angle of 5 - 15 degrees with the horizontal on the side where said means are located, in another preferred embodiment this angle ranges between 9 and 12 degrees.

The sloping upper surface preferably includes an angle of 15 - 25 degrees with the horizontal on the side opposite the side where said means are located, in another preferred embodiment this angle ranges between 20 and 23 degrees.

The invention furthermore relates to the method for transporting agricultural products, in particular potatoes, as defined in claim 7.

The invention will be described hereafter with reference to the figures.

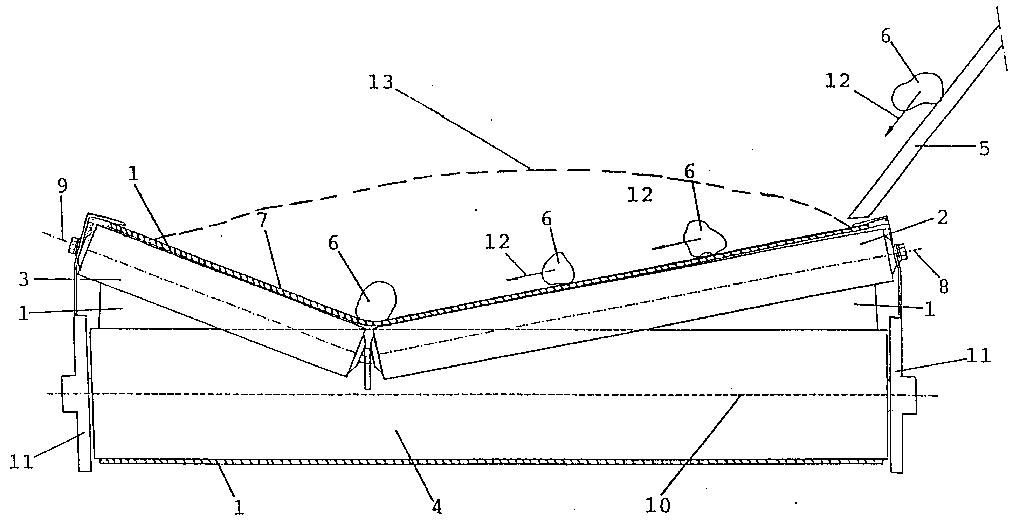

The drawing is a diagrammatic cross-sectional view of a conveyor belt, onto which potatoes are being deposited from the side.

The drawing shows a conveyor belt 1, which is passed over guide rollers 2, 3, 4. Potatoes 6 are guided from the side of conveyor belt 1 onto the upper surface 7 of conveyor belt 1 by means of a sloping guide 5.

Conveyor belt 1 is shown in sectional view, and guide rollers 2, 3, 4 are shown in elevational view. Upper surface 7 of conveyor belt occupies a sloping position at the location of guide 5, because central axis 8 of guide roller 2 includes an angle with the horizontal. This angle is 11 degrees, for example.

Upper surface 7 of conveyor belt 1 is inclined at an angle on the left-hand side of the drawing as well, because central axis 9 of guide roller 3 likewise includes an angle with the horizontal, for example an angle of 21 degrees. As is shown in the drawing, the upper surface 7 of conveyor belt 1 is thus gutter-shaped at the location of guide 5, whereby the deepest point of the gutter is located to the left of the centre of the conveyor belt.

The drawing furthermore shows in sectional view the return portion of conveyor belt 1 on the underside of guide roller 4, which has a horizontal central axis 10. The guide rollers are all freely rotatable in frame 11 of the device.

Since the upper surface 7 of conveyor belt 1 is inclined at an angle near guide 5, a good connection to guide 5 is obtained, whereby potatoes 6 undergo only a relatively minor change in direction upon landing onto the conveyor belt. The load being exerted on the potatoes, which may cause damage to the potatoes, is minimized thereby.

It is furthermore apparent from the drawing that potatoes 6 not only tend to roll or slide towards the centre of conveyor belt 1, as indicated by arrows 12, but may readily land beyond said centre. If a larger amount of potatoes is deposited onto conveyor belt 1, the potatoes will be distributed over the conveyor belt in the manner indicated by broken line 13, which distribution will be approximately symmetrical with respect to the centre of the conveyor belt when the V-shape of said conveyor belt is changed into a flat shape.

It will be apparent that the illustrated asymmetrical shape of the upper surface 7 of conveyor belt 1 in transverse direction provides a compensation for the asymmetric, that is, from one side, depositing of potatoes 6 onto conveyor belt 1. This increases the capacity of the conveyor belt, as a result of which the velocity of the conveyor belt can be reduced, thus reducing the risk of potatoes being damaged.

The illustrated embodiment is merely an example of a device according to the invention. The invention may also be embodied in many other ways.

## Claims

1. A device for transporting agricultural products, in particular potatoes, which device comprises a conveyor belt (1) and means (5) for depositing the agricultural products (6) on the conveyor belt (1) from the side of said conveyor belt (1), whereby at least part of the upper surface (7) of the conveyor belt (1) slopes downward in transverse direction from said side toward the central portion of the conveyor belt (1), at least near said means (5),
characterized in that said upper surface (7) slopes downward from the edge to a location beyond the centre of the conveyor belt (1).

2. A device according to any one of the preceding claims, characterized in that said upper surface (7) is substantially V-shaped in the transverse direction of the conveyor belt (1).

3. A device according to claim 2, characterized in that said V-shaped upper surface (7) comprises a wide sloping surface, on the side where said means (5) are located, and a narrower sloping surface, on the other side of the conveyor belt (1).

4. A device according to claim 2 or 3, characterized in that said V-shaped upper surface (7) includes a smaller angle with the horizontal on the side where said means (5) are located than on the other side of the conveyor belt (1).

5. A device according to any one of the preceding claims, characterized in that said sloping upper surface (7) includes an angle of 5 - 15 degrees with the horizontal on the side where said means (5) are located.

6. A device according to any one of the preceding claims, characterized in that said sloping upper surface (7) includes an angle of 15 - 25 degrees with the horizontal on the side opposite the side where said means (5) are located.

7. A method for transporting agricultural products, in particular potatoes, wherein the agricultural products (6) are deposited from the side onto a part of the upper surface (7) of a conveyor belt (1) that slopes downward in transverse direction from said side toward the central portion of the conveyor belt, characterized in that the upper surface (7) slopes to a location beyond the centre of the conveyor belt (1).

## Patentansprüche

1. Vorrichtung zum Transport bzw. Fördern landwirtschaftlicher Produkte, insbesondere von Kartoffeln, wobei die Vorrichtung umfaßt: ein Förderband (1) und Mittel (5) zum Absetzen der landwirtschaftlichen Produkte (6) auf dem Förderband (1) von der Seite des Förderbandes (1) aus, wobei wenigstens ein Teil der oberen Oberfläche (7) des Förderbandes (1) von dieser Seite aus in Querrichtung nach unten geneigt ist in Richtung des zentralen Abschnitts des Förderbandes (1), zumindest in der Nähe der Mittel (5), dadurch gekennzeichnet, daß die obere Oberfläche (7) sich vom Rand zu einem Ort oberhalb bzw. über dem Zentrum des Förderbandes (1) nach unten neigt.

2. Vorrichtung nach einem der vorstehenden Ansprüche, dadurch gekennzeichnet, daß die obere Oberfläche (7) im wesentlichen V-förmig in Querrichtung des Förderbandes (1) ist.

3. Vorrichtung nach Anspruch 2, dadurch gekennzeichnet, daß die V-förmige obere Oberfläche (7) an der Seite, wo die Mittel (5) angeordnet sind, eine breite geneigte Oberfläche umfaßt und eine schmälere geneigte Oberfläche an der anderen Seite des Förderbandes (1).

4. Vorrichtung nach Anspruch 2 oder 3, dadurch gekennzeichnet, daß, die V-förmige obere Oberfläche (7) einen kleineren Winkel mit der Horizontalen an der Seite ausbildet, wo die Mittel (5) angeordnet sind, als an der anderen Seite des Förderbandes (1).

5. Vorrichtung nach einem der vorstehenden Ansprüche, dadurch gekennzeichnet, daß die geneigte obere Oberfläche (7) an der Seite, wo die Mittel (5) angeordnet sind, einen Winkel von 5 - 15 Grad mit der Horizontalen bildet.

6. Vorrichtung nach einem der vorstehenden Ansprüche, dadurch gekennzeichnet, daR die geneigte obere Oberfläche (7) an der Seite, die der Seite gegenüberliegt, wo die Mittel (5) angeordnet sind, einen Winkel von 15 - 25 Grad mit der Horizontalen bildet.

7. Verfahren zum Transportieren landwirtschaftlicher Produkte, insbesondere von Kartoffeln, wobei die landwirtschaftlichen Produkte (6) von der Seite her abgesetzt werden auf einen Teil der oberen Oberfläche (7) eines Förderbandes (1), das sich in Querrichtung von der Seite in Richtung des zentralen Abschnitts des Förderbandes nach unten neigt, dadurch gekennzeichnet, daß sich die obere Oberfläche (7) zu einem Ort oberhalb des Zentrums des Förderbandes (1) neigt.

## Revendications

1. Dispositif destiné à transporter des produits agricoles, en particulier des pommes de terre, lequel dispositif comprend une bande transporteuse(1) et des moyens (5) pour déposer les produits agricoles (6) sur la bande transporteuse (1) par le côté de ladite bande transporteuse (1), de sorte qu'au moins une partie de la surface supérieure (7) de la bande transporteuse (1) est en pente vers le bas dans la direction transversale depuis ledit côté vers la partie centrale de la bande transporteuse (1), au moins à proximité desdits moyens (5),
caractérisé en ce que ladite surface supérieure (7) est en pente vers le bas depuis le bord jusqu'à un emplacement au-delà de la partie centrale de la bande transporteuse (1).

2. Dispositif selon l'une quelconque des revendications précédentes, caractérisé en ce que ladite surface supérieure (7) est sensiblement en forme de V dans la direction transversale de la bande transporteuse (1).

3. Dispositif selon la revendication 2, caractérisé en ce que ladite surface supérieure en forme de V (7) comprend une large surface en pente, sur le côté où lesdits moyens (5) sont situés, et une surface plus étroite en pente, sur l'autre côté de la bande transporteuse (1).

4. Dispositif selon la revendication 2 ou 3, caractérisé en ce que ladite surface supérieure en forme de V (7) fait un angle plus petit par rapport à l'horizontale sur le côté où lesdits moyens (5) sont situés que sur l'autre côté de la bande transporteuse (1).

5. Dispositif selon l'une quelconque des revendications précédentes, caractérisé en ce que ladite surface supérieure en pente (7) fait un angle allant de 5 à 15 degrés par rapport à l'horizontale sur le côté où lesdits moyens (5) sont situés.

6. Dispositif selon l'une quelconque des revendications précédentes, caractérisé en ce que ladite surface supérieure en pente (7) fait un angle allant de 15 à 25 degrés par rapport à l'horizontale sur le côté opposé au côté où lesdits moyens (5) sont situés.

7. Procédé destiné à transporter des produits agricoles, en particulier des pommes de terre, dans lequel les produits agricoles (6) sont déposés par le côté sur une partie de la surface supérieure (7) d'une bande transporteuse (1) qui est en pente vers le bas dans la direction transversale depuis ledit côté vers la partie centrale de la bande transporteuse, caractérisé en ce que la surface supérieure (7) est en pente vers un emplacement au-delà de la partie centrale de la bande transporteuse (1).
